(19) Europäisches Patentamt / European Patent Office / Office européen des brevets

(11) **EP 3 496 113 A1**

(12) **EUROPEAN PATENT APPLICATION**
published in accordance with Art. 153(4) EPC

(43) Date of publication:
**12.06.2019 Bulletin 2019/24**

(21) Application number: **17836881.7**

(22) Date of filing: **28.07.2017**

(51) Int Cl.:
**H01B 7/18** *(2006.01)*   **B29C 47/02** *(2006.01)*
**B29C 47/88** *(2006.01)*   **H01B 13/14** *(2006.01)*

(86) International application number:
**PCT/JP2017/027517**

(87) International publication number:
**WO 2018/025776 (08.02.2018 Gazette 2018/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **05.08.2016 JP 2016155074**

(71) Applicant: **Sumitomo Electric Industries, Ltd.**
**Osaka-shi, Osaka 541-0041 (JP)**

(72) Inventors:
• **SAKIYAMA, Daisuke**
  **Osaka-shi**
  **Osaka 554-0024 (JP)**
• **NISHIKAWA, Masatoshi**
  **Osaka-shi**
  **Osaka 554-0024 (JP)**

• **YAMAMOTO, Kohei**
  **Osaka-shi**
  **Osaka 554-0024 (JP)**
• **YAMADA, Shunsuke**
  **Osaka-shi**
  **Osaka 554-0024 (JP)**
• **YAMASAKI, Naoya**
  **Osaka-shi**
  **Osaka 554-0024 (JP)**
• **TADA, Kenichi**
  **Tokyo 107-0051 (JP)**
• **IYODA, Fumitoshi**
  **Tokyo 107-0051 (JP)**

(74) Representative: **Boult Wade Tennant LLP**
**5th Floor, Salisbury Square House**
**8, Salisbury Square**
**London EC4Y 8AP (GB)**

(54) **LOW WIND PRESSURE CABLE, AND METHOD FOR MANUFACTURING LOW WIND PRESSURE CABLE**

(57)   A low wind pressure electrical wire includes: a conductor; and an insulating layer that is provided on an outer periphery of the conductor, wherein a surface roughness of at least part of the insulating layer is greater than or equal to 3 $\mu$m.

FIG.1

EP 3 496 113 A1

# FIG.1

**Description**

Technical Field

The present invention relates to a low wind pressure electrical wire and a method of manufacturing a low wind pressure electrical wire.

The present application is based on and claims priority to Japanese Patent Application No. 2016-155074, filed on August 5, 2016, the entire contents of which are hereby incorporated herein by reference.

Background Art

One type of electrical wire used as an overhead line on a utility pole and the like is called a low wind pressure electrical wire. Patent Document 1 discloses, as a low wind pressure electrical wire, an insulated electrical wire including a conductor and an insulating layer covering the outer periphery of the conductor. In the low wind pressure electrical wire, for example, as described in Patent Document 1, the outer shape of the insulating layer is formed into a protruding-recessed shape such as a gear shape.

[Prior Art Document]

[Patent Document]

[Patent Document 1] Japanese Laid-open Patent Publication No. 2016-058387

Summary of the Invention

A low wind pressure electrical wire according to the present disclosure includes: a conductor; and an insulating layer that is provided on an outer periphery of the conductor, wherein a surface roughness of at least part of the insulating layer is greater than or equal to 3 $\mu$m.

A method of manufacturing a low wind pressure electrical wire according to the present disclosure includes: an extruding step of extruding, from an extruder, an insulating material that is in a fluid state into a predetermined shape to form an extruded material covering an outer periphery of a conductor with an unsolidified insulating layer; and a solidifying step of introducing the extruded material into a cooling tank to solidify the unsolidified insulating layer to form an insulating layer having the predetermined shape, wherein the method includes, between the extruding step and the solidifying step, a surface roughening step of cooling a surface layer of the unsolidified insulating layer by causing a fluid cooling material that is at a temperature less than an extrusion temperature to be in contact with the extruded material after being discharged from an outlet of the extruder and before being introduced into the cooling tank.

Brief Description of the Drawings

FIG. 1 is a cross-sectional view illustrating an example of a low wind pressure electrical wire according to an embodiment;
FIG. 2 is a partially enlarged explanatory view illustrating the vicinity of the surface of an insulating layer of the low wind pressure electrical wire illustrated in FIG. 1;
FIG. 3 is a graph illustrating, with respect to insulated electrical wires of respective samples measured in Test Example 1, a relationship between a surface roughness ($\mu$m) and a reduction rate (%) of wind pressure load for when the wind speed is 28 m/s; and

FIG. 4 is a graph illustrating, with respect to insulated electrical wires of respective samples measured in Test Example 1, a relationship between a surface roughness ($\mu$m) and a reduction rate (%) of wind pressure load for when the wind speed is 40 m/s.

Embodiment for Carrying Out the Invention

[Problem to Be Solved by the Present Disclosure]

Further reduction in wind pressure load is desired for low wind pressure electrical wires. A conventional low wind pressure electrical wire, in which the outer shape of an insulating layer is a protruding-recessed shape as described above, moves the separation point of wind to the leeward side of the low wind pressure electrical wire by this protruding-recessed shape so as to reduce the wind pressure load. However, it is desired to further reduce the wind pressure load. Typically, for overhead lines, reduction in wind pressure load at the wind speed of 40 m/s and reduction in wind pressure load at the wind speed of 28 m/s are required. In particular, in a low wind speed range in which the wind speed is 28 m/s that is treated as a strong wind level in normal conditions, it is desired to further reduce the wind pressure load. Furthermore, for a low wind pressure electrical wire that is used in an area where a very strong wind such as a typhoon may blow in addition to a normal level strong wind as described above, it is more preferable to reduce the wind pressure also in a high wind speed range in which the wind speed is 40 m/s.

Therefore, one object is to provide a low wind pressure electrical wire capable of reducing the wind pressure load. Also, another object is to provide a method of manufacturing a low wind pressure electrical wire by which a low wind pressure electrical wire capable of reducing the wind pressure load can be manufactured.

[Effect of the Present Disclosure]

A low wind pressure electrical wire of the present disclosure described above can reduce the wind pressure load. By a method of manufacturing a low wind pressure electrical wire of the present disclosure, a low wind pressure electrical wire capable of reducing the wind pressure load can be manufactured.

[Descriptions of Embodiment of the Present Disclosure]

The inventors of the present invention have obtained findings that the wind pressure load can be reduced when the surface of an insulating layer is roughened to a certain extent. In particular, the inventors of the present invention have obtained findings that it is possible to effectively reduce the wind pressure load in a low wind speed range in which the wind speed is approximately 28 m/s when the insulating layer has a predetermined protruding-recessed shape and has a surface roughened to a certain extent. One reason for the above is considered to be that wind can be disturbed by the surface roughness of the insulating layer. Also, the inventors of the present invention have obtained findings that when extruding and shaping an insulating layer, by performing, on an extruded material having an insulating layer that is in an unsolidified state extruded from an extruder and before being introduced into a cooling tank (hereinafter, which may be referred to as an unsolidified insulating layer), a local cooling process so as to cool only substantially the surface layer of the unsolidified insulating layer and thereafter introducing it in the cooling tank, an insulating layer having a surface roughened to a certain extent while having a predetermined outer shape by the extrusion can be formed. The present invention is based on these findings. First, the contents of an embodiment of the present invention will be described.

(1) According to one aspect of the present invention, a low wind pressure electrical wire includes a conductor; and an insulating layer that is provided on an outer periphery of the conductor, wherein a surface roughness of at least part of the insulating layer is greater than or equal to 3 $\mu$m. The above described surface roughness is measured with a known three-dimensional shape measuring apparatus. Details of the measuring method will be described in Test example described later below.

It can be said that the above described low wind pressure electrical wire includes an insulating layer whose surface roughness satisfies the above described predetermined range and whose surface is roughened to a certain extent. It is considered that due to this surface roughness, the above described wind pressure electrical wire causes wind turbulence. Typically, the above described low wind pressure electrical wire includes an insulating layer having, as the outer shape of the insulating layer, a predetermined protruding-recessed shape such as a gear shape as described above and while substantially maintaining this predetermined outer shape, the surface of the insulating layer is roughened to a certain extent as described above. It is considered that wind can be disturbed by a specific surface roughness as described above in addition to being able to move the separation point of wind downwind by this predetermined outer shape. Such a low wind pressure electrical wire as described above can effectively reduce the wind pressure load in a low wind speed range in which the wind speed is approximately 28 m/s in particular, as compared with a case in which the surface roughness is less than 3 $\mu$m and the surface is not substantially rough.

(2) As an example of the above described low wind pressure electrical wire, a configuration in which the surface roughness of at least part of the insulating layer is less than or equal to 13 $\mu$m may be used.

According to the above described configuration, in addition to the low wind speed range described above, the wind pressure load can be reduced also in a high wind speed range in which the wind speed is approximately 40 m/s. Therefore, the above described configuration can be suitably used in an area where strong winds from a normal level to a typhoon level blow.

(3) As an example of the above described wind pressure electrical wire, a configuration in which the insulating layer includes mountain-shaped portions protruding in a radial direction of the conductor and valley-shaped portions recessed in the radial direction of the conductor to be adjacent and periodic in a circumferential direction of the conductor, and the surface roughness of large flank portions connecting the mountain-shaped portions and the valley-shaped portions is greater than or equal to 3 $\mu$m may be used.

The outer shape of the insulating layer in the above described configuration is a protruding-recessed shape periodically having the mountain-shaped portions and the valley-shaped portions. In the above described configuration, within the surface of the insulating layer, at least the surfaces of the flank portions, where wind is considered to stay easily as compared with the top portions of the mountain-shaped portions, are roughened to a certain extent. Therefore, according to the above described configuration, because it is possible to secure a large area where wind turbulence easily occurs, it is possible to further reduce the wind pressure load.

(4) As an example of the above described wind pressure electrical wire (3) including the insulating layer where the mountain-shaped portions and the valley-shaped portions are repeatedly formed, a configuration in which each of the mountain-shaped portions includes: a first protruding portion and a second protruding portion arranged such that a center in a circumferential direction in the mountain-shaped portion is interposed, the first protruding portion and the second protruding portion protruding in the radial direction of the conductor with respect to the center in the circumferential direction; and a recessed portion arranged between the first protruding portion and the second protruding portion and recessed in the radial direction of the conductor, may be used.

The outer shape of the insulating layer in the above described configuration is a specific protruding-recessed shape having, in addition to large protrusions-recesses by the mountain-shaped portions and the valley-shaped portions, small protrusions-recesses on the mountain-shaped portions. It is considered that the above described configuration easily moves the separation point of wind to the leeward side due to this specific protruding-recessed shape, and can further reduce the wind pressure load.

(5) As an example of the above described wind pressure electrical wire (4) including the insulating layer having the specific protruding-recessed shape, a configuration in which at least one of a surface roughness of a first small flank portion connecting the first protruding portion and the recessed portion and a surface roughness of a second small flank portion connecting the second protruding portion and the recessed portion is greater than or equal to 3 $\mu$m may be used.

In the above described configuration, within the surface of the insulating layer, at least the surfaces of the large flank portions, where wind is considered to stay easily as compared with the top portions of the mountain-shaped portions, and at least one of the surfaces of the first small flank portions and the surfaces of the second small flank portions are roughened to a certain extent. Therefore, according to the above described configuration, because it is possible to further secure a large area where wind turbulence easily occurs, it is possible to further reduce the wind pressure load.

(6) A method of manufacturing a low wind pressure electrical wire according to one aspect of the present invention includes: an extruding step of extruding, from an extruder, an insulating material that is in a fluid state into a predetermined shape to form an extruded material covering an outer periphery of a conductor with an unsolidified insulating layer; and a solidifying step of introducing the extruded material into a cooling tank to solidify the unsolidified insulating layer to form an insulating layer having the predetermined shape, wherein the method includes, between the extruding step and the solidifying step, a surface roughening step of cooling a surface layer of the unsolidified insulating layer by causing a fluid cooling material that is at a temperature less than an extrusion temperature to be in contact with the extruded material after being discharged from an outlet of the extruder and before being introduced into the cooling tank. The temperature of the fluid cooling material is the outlet temperature at which the fluid cooling material is blown toward the extruded material.

In the method of manufacturing the low wind pressure electrical wire described above, before the extruded material extruded from the extruder is introduced into the cooling tank to completely solidify the unsolidified insulating layer, the surface layer of the unsolidified insulating layer is locally cooled. Thereby, it is possible to roughen the surface of the insulating layer to a certain extent while maintaining the predetermined outer shape formed by the extruder, and typically, it is possible to manufacture a low wind pressure electrical wire including an insulating layer having the surface roughness greater than or equal to 3 $\mu$m as described above. As described above, the low wind pressure electrical wire in which the surface of the insulating layer is roughened to a certain extent can reduce the wind pressure load. Therefore, according to the method of manufacturing the low wind pressure electrical wire described above, it is possible to manufacture a low wind pressure electrical wire that can easily reduce the wind pressure load as compared with a case in which the surface is not substantially rough. By adjusting the outer shape of the insulating layer formed by the extruder, according to the method of manufacturing the low wind pressure electrical wire described above, it is possible to manufacture a low wind pressure electrical wire that can reduce the wind pressure load particularly in a low wind speed range as described above. In addition, in the method of manufacturing the low wind pressure electrical wire described above, providing an in-line surface roughening step between the extruding step and solidifying step is excellent in manufacturability.

(7) As an example of the method of manufacturing the low wind pressure electrical wire described above, a configuration in which the fluid cooling material is a gas, and, in the surface roughening step, the gas is blown to the extruded material at a pressure greater than or equal to 0.01 MPa and less than or equal to 0.1 MPa may be used.

The above described configuration is a simple configuration by which a low wind pressure electrical wire that can reduce the wind pressure load can be manufactured and a compressed gas at a relatively low pressure is blown, and a facility is easily configured.

<Details of Embodiment of the Present Invention>

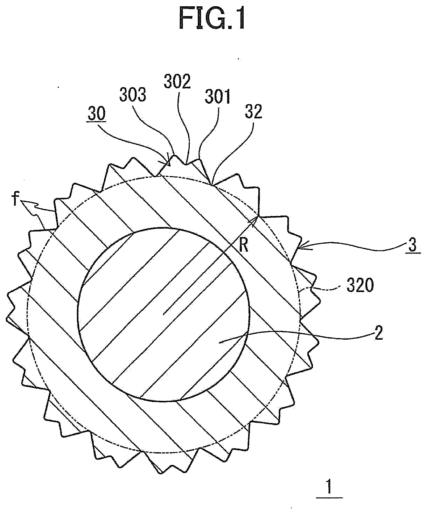

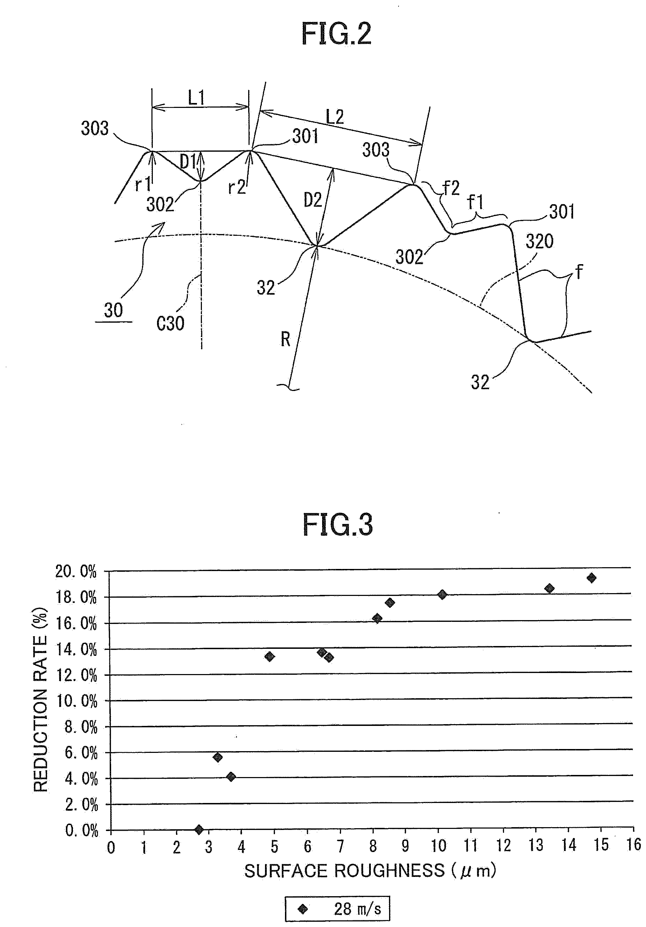

In the following, an embodiment of the present invention will be described in detail with reference to the drawings as appropriate. In the drawings, the same reference numerals indicate the same name elements. In FIG. 1 and FIG. 2, mountain-shaped portions and valley-shaped portions are emphasized for clarity, and they are different from their actual sizes.

[Low Wind Pressure Electrical Wire]

A low wind pressure electrical wire 1 according to the embodiment is a type of an insulated electrical wire including a conductor 2 and an insulating layer 3 that is provided on the outer periphery of the conductor 2, and is used as an overhead line on a utility pole or the like. Typically, the low wind pressure electrical wire 1, in which the outer shape of the insulating layer 3 is a protruding-recessed shape (see FIG. 1, Patent Document 1), moves the separation point of wind to the leeward side by this protruding-recessed shape so as to reduce the wind pressure load. The outer shape of the insulating layer 3 illustrated in FIG. 1 is an example and can be changed as appropriate. In particular, in the low wind pressure electrical wire 1 according to the embodiment, the surface of the insulating layer 3 is roughened to a certain extent. Quantitatively, at least part of the surface roughness of the insulating layer 3 is greater than or equal to 3 μm. In the following, the details will be described.

(Conductor)

Typically, the conductor 2 is made of one type of wire material selected from a hard copper wire, a hard copper stranded wire, a hard aluminum stranded wire, an aluminum conductor steel-reinforced stranded wire (which is called ACSR), an aluminum conductor aluminum-clad steel-reinforced stranded wire (which is called ACSR/AC or the like), and the like (FIG. 1 is illustrated in a simplified manner in which a single wire or a stranded wire is indicated by a round wire.)
The cross-sectional area of the conductor 2 can be selected as appropriate. For example, in a case of being used in a range in which the nominal voltage is greater than or equal to 600 V and less than or equal to 33 kV, the nominal cross-sectional area of the conductor 2 may be approximately greater than or equal to 12 mm$^2$ (diameter 4 mm) and less than or equal to 500 mm$^2$. In particular, in a case of being used in a range in which the nominal voltage is greater than or equal to 6.6 kV, the nominal cross-sectional area of the conductor 2 may be approximately greater than or equal to 32 mm$^2$ and less than or equal to 240 mm$^2$.

(Insulating Layer)

Protruding-Recessed Shape

Typically, the outer shape of the insulating layer 3 is a protruding-recessed shape. Here, the protruding-recessed shape has typically relatively large protrusions-recesses that are protrusions-recesses shaped regularly in accordance with the hole shape of a die of an extruder, for example, in which the maximum mountain height and the maximum valley depth are greater than or equal to 50 μm, or further greater than or equal to 100 μm. The insulating layer 3 illustrated in FIG. 1 exemplifies a case of including mountain-shaped portions 30 protruding in the radial direction of the conductor 2 and valley-shaped portions 32 recessed in the radial direction of the conductor 2 to be adjacent and periodic in the circumferential direction of the conductor 2. The low wind pressure electrical wire 1, including the insulating layer 3 in which the mountain-shaped portions 30 and the valley-shaped portions 32 are periodically arranged, reduces the wind pressure load by moving the separation point of wind to the leeward side as described above with the protrusions-recesses of the mountain-shaped portions 30 and the valley-shaped portions 32. In this example, the mountain-shaped portions 30 are made to have a specific protruding-recessed shape. Specifically, each of the mountain-shaped portions 30 includes: a first protruding portion 301 and a second protruding portion 303 arranged such that the center C30 (FIG. 2) in the circumferential direction is interposed therebetween and the first protruding portion 301 and the second protruding portion 303 protrude in the radial direction of the conductor 2 with respect to the center C30 in the circumferential direction;

and a recessed portion 302 arranged between the first protruding portion 301 and the second protruding portion 303 and recessed in the radial direction of the conductor 2. Because of including relatively large protrusions-recesses that are the mountain-shaped portions 30 and the valley-shaped portions 32 and including relatively small protrusions-recesses that are the protruding portions 301 and 303 and the recessed portions 302, the low wind pressure electrical wire 1 easily moves the separation point of wind toward the leeward side and easily further reduces the wind pressure load.

In a case where the mountain-shaped portions 30, the valley-shaped portions 32, the first protruding portions 301, the second protruding portions 303, and the recessed portions 302 are provided, it is preferable to satisfy the following conditions (1) to (5), or further satisfy the conditions (1) to (7), for further easily reducing the wind pressure load.

(1) $L1/D1 \leq 25$
(2) $L2/D2 \leq 25$, $D2 > D1$
(3) $L2/L1 < 10$
(4) $0.2 \leq r1, r2 \leq 1.0$, preferably, $r1, r2 \leq 0.78$, further, $r1, r2 < 0.5$
(5) $12 \leq n$
(6) $0.005 \leq D1/R$
(7) $0.005 \leq D2/R$

The meanings of the symbols indicated in the conditions (1) to (7) are as follows (see FIG. 2).

L1 (mm): The interval between the first protruding portion 301 and the second protruding portion 303 provided in one mountain-shaped portion 30:

L2 (mm): The interval between the first protruding portion 301 of one mountain-shaped portion 30 and the second protruding portion 303 of the other mountain-shaped portion 30, in adjacent mountain-shaped portions 30 and 30

D1 (mm): The maximum distance (depth) from the straight line connecting the first protruding portion 301 and the second protruding portion 303 provided in one mountain-shaped portion 30 to the bottom portion of the recessed portion 302

D2 (mm): The maximum distance (depth) from the straight line connecting the first protruding portion 301 of one mountain-shaped portion 30 and the second protruding portion 303 of the other mountain-shaped portion 30 to the bottom portion of the valley-shaped portion 32, in adjacent mountain-shaped portions 30 and 30

r1 (mm): The radius of curvature of the top portion of the first protruding portion 301 formed in an arc shape as viewed in the axial direction of the conductor 2

r2 (mm): The radius of curvature of the top portion of the second protruding portion 303

n: The number of sets of the mountain-shaped portions 30 and the valley-shaped portions 32

R: The diameter of the inscribed circle 320 (indicated by the two-dot chain line in FIG. 1 and FIG. 2) in contact with the bottoms portions of the respective valley-shaped portion 32

In the insulating layer 3 of this example, the number n of sets is an odd number, and the outer shape of the insulating layer 3 is a line symmetrical shape with respect to a straight line passing through the center of the conductor 2 as an axis of symmetry. The number n of sets may be an even number. In these cases, the insulating layer 3 has a rotationally symmetric shape with the center of the conductor 2 as the center. Also, although the mountain-shaped portions 30 and the valley-shaped portions 32 in this example are provided linearly and continuously along the axial direction of the conductor 2, the mountain-shaped portions 30 and the valley-shaped portions 32 may be provided continuously in a helical configuration with respect to the axial direction.

The lower limit values of the conditions (1), (2), and (3), and the upper limit values of (5), (6), and (7) are not particularly limited. For example, the lower limit values of the conditions (1) and (2) may be approximately 4, the lower limit value of the condition (3) may be approximately 1.25, the upper limit value of (5) may be approximately 20, and the upper limit values of the conditions (6) and (7) may be approximately 0.03.

As another protruding-recessed shape, various shapes can be used such as a configuration in which inverted-triangular groove portions are formed at predetermined intervals in the circumferential direction on the outer peripheral surface of the insulating layer 3. The outer shape of the insulating layer 3 may be a known protruding-recessed shape.

Constituent Material

As a constituent material of the insulating layer 3, for example, one kind of insulating material may be selected from polyvinyl chloride (PVC), polyethylene (PE), crosslinked polyethylene (PEX), ethylene propylene rubber (EPR), and the like.

The thickness of the insulating layer 3 can be as appropriate selected within a range that satisfies predetermined insulating characteristics. In a case where the outer shape of the insulating layer 3 is a protruding-recessed shape as described above, for example, taking a circle inscribed on the bottoms of the recessed portions in the insulating layer 3 around the center of the conductor 2, the diameter of the inscribed circle may be adjusted as appropriate. For example, when used at a nominal voltage greater than or equal to 600 V and less than or equal to 33 kV, particularly, used at greater than or equal to 6.6 kV, the diameter of the inscribed circle (in this example, the diameter R of the inscribed circle 320 of the valley-shaped portions 32) is greater than or equal to 8 mm and less than or equal to 35 mm, or further is greater than or equal to 10 mm and less than or equal to 30 mm.

Surface Roughness

The surface roughness of at least part of the surface of the insulating layer 3 is made greater than or equal to 3 $\mu$m. Here, protrusions-recesses of which surface roughness is to be measured are not regular relatively large-scale protrusions-recesses large as described above, but are, typically, irregular small-scale protrusions-recesses typically having the maximum amplitude of 20 $\mu$m or less quantitatively.

When the above described surface roughness is greater than or equal to 3 $\mu$m, the surface of the insulating layer 3 is rough enough to cause wind turbulence, and the wind pressure load can be reduced. In particular, it is possible to effectively reduce the wind pressure load in a low wind speed range in which the wind speed is approximately 28 m/s (see Test Example 1 that will be described later below). It is considered that increasing the surface roughness makes it easier to cause wind turbulence. Therefore, the surface roughness described above can be made greater than or equal to 3.2 $\mu$m, further greater than or equal to 3.5 $\mu$m, or greater than or equal to 4 $\mu$m. As the above described surface roughness increases, the wind pressure load in the above described wind speed range can be further reduced. When the above described surface roughness is greater than or equal to 4.5 $\mu$m, or further greater than or equal to 5 $\mu$m, the reduction rate of wind pressure load (that will be described later below) in the above described wind speed range can be made greater than or equal to 10%. When the surface roughness is greater than or equal to 7 $\mu$m, the reduction rate can be made greater than or equal to 15% (see Test Example 1 that will be described later below). It is considered that, when the above described surface roughness is excessively large, the effect of reducing the wind pressure load due to relatively large protrusions-recesses as described above that constitute the outer shape of the insulating layer 3 may be decreased and the appearance may be degraded. Therefore, the surface roughness described above may be made less than or equal to 20 $\mu$m, or further less than or equal to 15 $\mu$m.

When the above described surface roughness is less than or equal to 13 $\mu$m, not only the wind pressure load in the above described low wind speed range can be reduced but also the wind pressure load in the high wind speed range in which the wind speed is approximately 40 m/s can be reduced (see Test Example 1 that will be described later below). As the above described surface roughness decreases, the wind pressure load can be easily reduced in the above described high wind speed range (see Test Example 1 that will be described later below), and the above described surface roughness can be made less than or equal to 12 $\mu$m or further less than or equal to 11 $\mu$m, approximately. When the above described surface roughness is less than or equal to 10.5 $\mu$m, the reduction rate of wind pressure load in the above described high wind speed range can be made greater than or equal to 5% (see Test Example 1 that will be described later below). Furthermore, when the surface roughness described above is less than or equal to 10 $\mu$m, the appearance is excellent and the commercial value is high.

When the above described surface roughness is greater than or equal to 3 $\mu$m and less than or equal to 13 $\mu$m, the wind pressure load can be reduced against a normal level strong wind whose wind speed is approximately 28 m/s and against a typhoon level strong wind whose wind speed is approximately 40 m/s (see Test Example 1 that will be described later below). Hence, such a low wind pressure electrical wire 1 can be suitably used in an area where not only a normal level strong wind but also a typhoon level strong wind blow. For a low wind pressure electrical wire 1 that is used in an area in which a typhoon level strong wind as described does not substantially blow, the surface roughness may be made greater than or equal to 13 $\mu$m. In this case, further reduction in wind pressure load can be expected (see Test Example 1 that will be described later below).

Wind blows at any position of the low wind pressure electrical wire 1 that is in a state of being bridged over utility poles or the like. Therefore, it is preferable that the insulating layer 3 has many rough surface areas satisfying the surface roughness greater than or equal to 3 $\mu$m. In a case where the outer shape of the insulating layer 3 is a protruding-recessed shape as described above, it is considered that the recessed portions are desired to be portions where wind easily stays to cause wind turbulence. Therefore, it is preferable that at least recessed portions in the surface of the insulating layer 3 are rough surface areas. In this example, in the insulating layer 3 periodically having the mountain-shaped portions 30 and the valley-shaped portions 32, at least the surface roughness of the large flank portions f (FIG. 2) connecting the mountain-shaped portions 30 and the valley-shaped portions 32 is preferably greater than or equal to 3 $\mu$m. It is more preferable that the substantially entire surface of the large flank portions f is a rough surface area. It is preferable that, in the insulating layer 3 having relatively small protrusions-recesses on the mountain-shaped portions 30, the surface roughness of the large flank portions f and at least one of the surface roughness of the first small flank portions f1, connecting the first protruding portions 301 and the recessed portions 302 (FIG. 2), and the surface roughness of the second small flank portions f2, connecting the second protruding portions 303 and the recessed portions 302 (FIG. 2), are greater than or equal to 3 $\mu$m. It is more preferable that the substantially entire surfaces of the large flank portions f and both the flank portions f1 and f2 are rough surface areas. When the insulating layer 3 has a configuration in which the substantially entire surface is a rough surface area, it is considered that wind received at any position of the insulating layer 3 can be disturbed. This configuration is preferable, because of being easily manufactured by a method of manufacturing a low wind pressure electrical wire according to the embodiment that will be described later below and being excellent in manufacturability, for example. When the surface roughness of a rough surface area as described above is less than or equal to 13 $\mu$m, the wind pressure load in a low wind speed range and the wind pressure load in a high wind speed range can also be reduced, which is preferable.

Other

The insulating layer 3 can be provided with an embossed display portion (not illustrated) indicating the item name, the size, the manufacturer name, the manufacturing year, and the like.

(Effect)

In the low wind pressure electrical wire 1 according to the embodiment, because the surface roughness of at least part of the insulating layer 3 is greater than or equal to 3 $\mu$m and is roughened to a certain extent, it is possible to reduce the wind pressure load. In particular, the low wind pressure electrical wire 1 can effectively reduce the wind pressure load in a low wind speed range in which the wind speed is approximately 28 m/s, as compared with a case where the above described surface roughness is less than 3 $\mu$m. This effect will be specifically described with Test Example that will be described later below.

[Method of Manufacturing Low Wind Pressure Electrical Wire] (Overview)

Typically, the low wind pressure electrical wire 1 according to the embodiment can be manufactured by extruding an insulating material that is in a fluid state to the outer periphery of the conductor 2, and thereafter solidifying the insulating material that is in an unsolidified state (unsolidified insulating layer) to be the insulating layer having a predetermined shape. Particularly, by performing a treatment for roughening at least part of the surface of the insulating layer 3 to a certain extent, the low wind pressure electrical wire 1 according to the embodiment can be manufactured. Here, it is considered to roughen the surface of the solidified insulating layer by various methods such as a mechanical method (cutting, blasting treatment, and the like), a chemical method, a thermal method, and the like. However, in this case, the outer shape of the insulating layer may be damaged. With respect to the above, in the method of manufacturing a low wind pressure electrical wire according to the embodiment, the surface of the insulating layer 3, after being solidified, is not roughened, but by performing a specific operation on the surface of the unsolidified insulating layer, the surface of the insulating layer 3 can be roughened to a certain extent without substantially damaging a predetermined outer shape formed by an extruder. A method of manufacturing a low wind pressure electrical wire according to the embodiment includes: an extruding step; a solidifying step; and a surface roughening step, and the surface roughening step is performed between the extruding step and the solidifying step. In the following, each step will be described in detail.

(Extruding Step)

In the extruding step, an insulating material that is in a fluid state is extruded from an extruder into a predetermined shape to form an extruded material covering the outer periphery of the conductor 2 with an unsolidified insulating layer. In performing the extruding step, the conductor 2 (see the above description of the conductor); an insulating material that serves as a material of the insulating layer 3 (see the above description of the insulating layer); and an extruder that extrudes the insulating material that is in a fluid state into a predetermined shape are prepared. For the extruder, a die having a hole capable of shaping the insulating layer 3 having a predetermined outer shape is installed. The extrusion conditions such as the extrusion temperature and the extrusion pressure may be set as appropriate in accordance with the type of insulating material and the like so as to be able to shape a predetermined outer shape with high accuracy (in this example, so as to satisfy the above described conditions (1) to (5), or preferably the conditions (1) to (7)) .

(Surface Roughening Step)

In the surface roughening step, a surface layer of the unsolidified insulating layer is cooled by causing a fluid cooling material that is at a temperature less than an extrusion temperature to be in contact with the extruded material after being discharged from the outlet of the extruder and before being introduced into the cooling tank. The extruded material after being discharged from the outlet of the extruder and before being introduced into the cooling tank is at a temperature close to the extrusion temperature (for example, which is approximately 210°C for PE) and includes the unsolidified insulating layer that is in a relatively soft state. In the surface roughening step, the surface layer of this unsolidified insulating layer is locally cooled. Here, the inventors of the present invention have obtained findings that by blowing a compressed gas at a temperature lower than the extrusion temperature and at a relatively low pressure to the surface of the extruded material (unsolidified insulating layer) and thereafter cooling it in a cooling tank, an insulating layer having a surface roughened to a certain extent can be formed without substantially damaging a predetermined outer shape, and an insulated electrical wire having such an insulating layer is suitable as a low wind pressure electrical wire because of being able to reduce the wind pressure load particularly in a low wind speed range. Although the reason why such a result is obtained is not clear, it is considered that, by blowing, to the unsolidified insulating layer, a compressed gas at a temperature lower than the extrusion temperature and at a relatively low pressure as described above, only the surface layer of the unsolidified insulating layer can be locally cooled to a certain extent to form wrinkles, that is, a surface roughened to a certain extent can be obtained. Thus, in the method of manufacturing the low wind pressure electrical wire according to the embodiment, the surface layer of the unsolidified insulating layer is locally cooled.

A contact portion with the fluid cooling material can be provided at a desired position in the range from the outlet of the extruder to the introduction port of the cooling tank. In particular, in the vicinity of the outlet of the extruder, the temperature of the unsolidified insulating layer is the highest and the unsolidified insulating layer is in a soft state. Therefore, it is considered preferable to provide a contact portion with the fluid cooling material such that the vicinity of the outlet of the extruder is included, because this makes it easy to cool the surface layer of the unsolidified insulating layer. It is also possible to make the substantially entire area of the above described range as the contact portion with the fluid cooling material.

At the contact portion with the fluid cooling material, a blowing mechanism (such as a nozzle) of the fluid cooling material may be arranged such that the fluid cooling material contacts at least part of the unsolidified insulating layer in its circumferential direction. For example, by providing a blowing mechanism such that the fluid cooling material contacts only part of the unsolidified insulating layer in its circumferential direction, part of the insulating layer 3 in its circumferential direction (for example, the above described large flank portions f or the like) can be locally roughened. When providing a blowing mechanism such that the fluid cooling material evenly contacts the substantially entire circumference of the unsolidified insulating layer, it is possible to roughen the substantially entire surface of the insulating layer 3. In this case, it is easy to control the blowing conditions and operability is excellent, and it is easy to uniformly roughen the entire surface of the insulating layer 3. Further, it is possible to manufacture a wind-pressure-resistant electrical wire whose substantially entire surface of the insulating layer 3 is roughened to a certain extent, typically, it is possible to manufacture the low wind pressure electrical wire 1 whose surface roughness is greater than or equal to 3 $\mu$m.

As the fluid cooling material, one or more kinds of fluid selected from a gas, a gas-liquid mixture, and a liquid may be used. A gas has a lower cooling capacity than that of a liquid, but is easy to use in a simple facility. A gas-liquid mixture has a higher cooling capacity than that of a gas, and a liquid has a further higher cooling capacity. In the range from the outlet of the extruder to the introduction port of the cooling tank, a plurality of kinds of fluids may also be used. For example, it is possible to use a configuration of using, in the vicinity of the outlet of the extruder, a liquid having a higher cooling ability and using, in the vicinity of the inlet of the cooling tank, a gas. The gas may be, for example, air (used as a compressed gas), the liquid may be, for example, water, and the gas-liquid mixture may be, for example, air containing water droplets (used as a compressed fluid of gas-liquid mixture).

By making the temperature of the fluid cooling material (the outlet temperature of the blowing mechanism of the fluid cooling material) at least less than the extrusion temperature, the unsolidified insulating layer in contact with the fluid cooling material can be cooled. As the temperature of the fluid cooling material decreases, it is possible to further cool the unsolidified insulating layer. If the temperature is excessively low, the unsolidified insulating layer may be excessively solidified before being introduced into the cooling tank, and a local deformation may occur. Therefore, the lower limit of the temperature of the fluid cooling material may be an ambient temperature (for example, which is approximately 20°C). The temperature of the fluid cooling material may be selected in a range greater than or equal to an ambient temperature and less than the extrusion temperature and in consideration of the kind of the fluid cooling material, the extrusion temperature, and the surrounding temperature, and the like. For example, in a case where the fluid cooling material is a gas, the temperature of the fluid cooling material may be made less than or equal to approximately 100°C for an extrusion temperature that is greater than or equal to 150°C, and the temperature of the cooling material may be made less than or equal to approximately 80°C for an extrusion temperature that is greater than or equal to 130°C.

By adjusting the kind, the temperature, the pressure at the time of blowing, and the like of the fluid cooling material, the cooling state of the surface of the unsolidified insulating layer can be adjusted. For example, in a case where the fluid cooling material is a gas, the pressure at which the compressed gas is blown to the extruded material may be set to be greater than or equal to 0.01 MPa and less than or equal to 0.1 MPa. By setting the above described pressure to be greater than or equal to 0.01 MPa, the unsolidified insulating layer can be cooled to a certain extent. As the above described pressure is increased, the cooling capacity can be enhanced, and setting the above described pressure to be less than or equal to 0.1 MPa enables to locally cool the surface layer. In consideration of proper solidification of the surface layer of the unsolidified insulating layer, prevention of local deformation, and the like, the above described pressure may be made greater than or equal to 0.01 MPa and less than or equal to 0.08 MPa or further greater than or equal to 0.01 MPa and less than or equal to 0.05 MPa.

(Solidifying Step)

In this step, the extruded material is introduced into a cooling tank to solidify the unsolidified insulating layer to form the insulating layer 3 having a predetermined shape. Through this process, it is possible to manufacture a wind pressure electrical wire including the insulating layer 3 having a predetermined outer shape in accordance with the hole shape of the die and in which at least part of the surface of the insulating layer 3 is roughened to a certain extent, typically, it is possible to manufacture the low wind pressure electrical wire 1 whose surface roughness is less than or equal to 3 μm. As the cooling tank, typically, a water tank having a depth sufficient to immerse an extruded material and having a length sufficient to cool and solidify an unsolidified insulating layer is used.

(Effect)

According to the method of manufacturing the wind pressure electrical wire of the embodiment, it is possible to manufacture, by performing a specific cooling between discharge from an extruder and introduction into a cooling tank, the wind pressure electrical wire, in which at least part of the surface of the insulating layer 3 is roughened to a certain extent as described above, and that can therefore reduce the wind pressure load. This effect will be specifically described with Test Example that will be described later below.

[Test Example 1]

Insulated electrical wires were prepared by extruding and shaping insulating layers on the outer peripheries of conductors under various conditions, and the surface conditions of the insulating layers and the reduction states of wind pressure load were investigated.

(Sample Preparation)

In this test, assuming an insulated electrical of a nominal voltage 6.6 kV, a conductor having a nominal cross sectional area of 120 mm$^2$ was prepared, and polyethylene (PE) was prepared as a material for the insulating layer. In this test, in order to extrude and shape an insulating layer having a specific protruding-recessed shape including the mountain-shaped portions 30, the valley-shaped portions 32, the first protruding portions 301, the second protruding portions 303, and the recessed portions 302 illustrated in FIG. 1, a die provided with a hole of the specific protruding-recessed shape was prepared and installed in an extruder. For each sample, the die having the same hole shape satisfying the conditions (1) to (7) described above was used. By the prepared extruder provided with the die, after PE was extruded to the outer periphery of the conductor (extrusion temperature of approximately 210°C), the extruded material having the unsolidified insulating layer was introduced into a cooling tank to solidify the unsolidified insulating layer. In this manner, an insulated electrical wire for each sample having an insulating layer shaped into a protruding-recessed shape was obtained.

In particular, in this test, between the outlet of the extruder and the introduction port of the cooling tank, to the extruded material having the unsolidified insulating layer, a compressed gas at a temperature greater than or equal to an ambient temperature and less than the extrusion temperature was blown. The pressure at the time of blowing was varied to change the surface state of the insulating layer. The sample No. 1-1 is a sample to which a compressed gas was not blown. The samples No. 1-2 to No. 1-11 are samples for which the pressures at the time of blowing were selected from the range of greater than or equal to 0.01 MPa and less than or equal to 0.1 MPa, and the compressed gas was blown such that the compressed gas contacted the substantially entire surface in the circumferential direction of the extruded material in the vicinity of the outlet of the extruder (here, the range of 200 mm or less from the outlet). The larger the sample number, the higher the pressure at the time of blowing. It was confirmed that the obtained insulated electrical wires of the samples No. 1-2 to No. 1-11 satisfy the above described conditions (1) to (7). Further, in this test, as the pressure at the time of blowing increases, the surface roughness tends to increase easily.

(Evaluation)

Surface Roughness

With respect to each sample of the obtained insulated electrical wires, using a commercially available three-dimensional measuring device (for example, a noncontact 3D measuring machine, VR 3000, manufactured by Keyence Corporation), the surface roughness was measured as follows. The results are indicated in Table 1. A three-dimensional image of the outer shape of the insulating layer is acquired by this three-dimensional measuring device, and a measurement area is extracted in this three-dimensional image. Here, taking a rectangular area of 2 mm in the circumferential direction of the insulated electrical wire and 4 mm in the axial direction of the insulated electrical wire as a target range to be measured (8 mm$^2$), a measurement area having a size corresponding to the target range to be measured is extracted from large flank portions f. At a same position in the axial direction of the insulated electrical wire, measurement areas are extracted for respective n large flank portions f that are present in the circumferential direction, and the n measurement targets are obtained in total (n ≥ 2). The obtained locations are referred to as (a). Similarly, n measurement areas are obtained for locations away from the obtained locations (a) by 1000 mm or more in the axial direction of the insulated electrical wire (referred to as the obtained locations (β)) and for locations away from the obtained locations (a) by 2000 mm or more (referred to the obtained locations (y)). That is, 3 × n measurement areas are obtained in total. For each of the measurement area images, setting 50 μm to S filter and 1 mm to L filter, the arithmetic mean height Sa (μm) of each of the measurement areas is obtained. The arithmetic mean height Sa is a parameter obtained by extending the arithmetic mean height Ra of a line to a surface. The arithmetic mean height Sa can be automatically measured by a three-dimensional measuring device. Table 1 indicates the means of 3 × n arithmetic mean heights Sa as the surface roughnesses.

Drag Coefficient C$_D$

With respect to each sample of the obtained insulated electrical wires, using a wind tunnel facility, the wind pressure load (drag) was measured and the drag coefficient C$_D$ was obtained from the wind pressure load. The results are indicated in Table 1. It can be said that as the drag coefficient C$_D$ decreases, the wind pressure load can be further reduced. Here, for each insulated electrical wire, the wind pressure load when wind whose wind speed is 28 m/s was blown from one side to the other side of the insulated electrical wire in a direction orthogonal to the axial direction of the insulated electrical wire and the wind pressure load when wind whose wind speed is 40 m/s was blown were measured. Then, drag coefficients C$_D$ were obtained from the following formula. In the following formula, Fx is the wind pressure load (drag) (N), ρ is the air density (kg/m$^3$), V is the wind speed (m/s), φ is the outer diameter of the insulated electrical wire (m), and X is the effective length of the insulated electrical wire (m).

$$C_D = Fx/(0.5 \times \rho \times V^2 \times \phi \times X)$$

Reduction Rate of Wind Pressure Load

In this test, for each of a case in which the wind speed is 28 m/s and a case in which the wind speed is 40 m/s, using, as a reference value, the drag coefficient of the sample whose drag coefficient CD is the largest, the percentage of the difference between the reference value and the drag coefficient of each sample was evaluated as the reduction rate of wind pressure load (%) with respect to the reference value. The results are indicated in Table 1.

```
Reduction rate of wind pressure load (%) = {(resistance
coefficient of reference value - resistance coefficient of
each corresponding sample)/resistance coefficient of
reference value} × 100
```

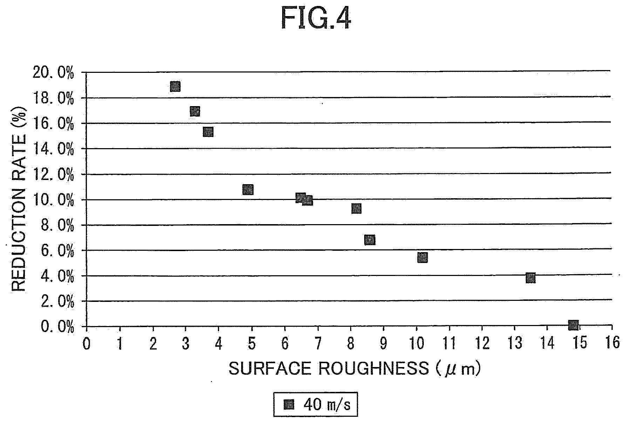

For the case where the wind speed is 28 m/s, the drag coefficient of the sample No. 1, for which the surface roughening step was not performed between the extruding step and the solidifying step, is taken as the reference value. For the case where the wind speed is 40 m/s, the drag coefficient of the sample No. 1-11 is taken as the reference value.
Also, FIG. 3 and FIG. 4 illustrate, respectively for the case in which the wind speed is 28 m/s and the case in which the wind speed is 40 m/s, the relationships between the surface roughness ($\mu$m) and the reduction rate (%) of wind pressure load. The graph illustrated in FIG. 3 indicates the above described relationship for the case in which the wind speed is 28 m/s; the horizontal axis indicates the surface roughness ($\mu$m), and the vertical axis indicates the reduction rate (%) of wind pressure load. The graph illustrated in FIG. 4 indicates the above described relationship for the case in which the wind speed is 40 m/s; the horizontal axis indicates the surface roughness ($\mu$m), and the vertical axis indicates the reduction rate (%) of wind pressure load.

[Table 1]

| SAMPLE No. | | 1-1 | 1-2 | 1-3 | 1-4 | 1-5 | 1-6 | 1-7 | 1-8 | 1-9 | 1-10 | 1-11 |
|---|---|---|---|---|---|---|---|---|---|---|---|---|
| SURFACE ROUGHNESS ($\mu$m) | | 2.7 | 3.3 | 3.7 | 4.9 | 6.5 | 6.7 | 8.2 | 8.6 | 10.2 | 13.5 | 14.8 |
| 28 m/s WIND SPEED | DRAG COEFFICIENT $C_D$ | 1.004 | 0.948 | 0.963 | 0.87 | 0.867 | 0.871 | 0.841 | 0.829 | 0.823 | 0.819 | 0.811 |
| | REDUCTION RATE | 0.0% | 5.6% | 4.1% | 13.3% | 13.6% | 13.2% | 16.2% | 17.4% | 18.0% | 18.4% | 19.2% |
| 40 m/s WIND SPEED | DRAG COEFFICIENT $C_D$ | 0.752 | 0.770 | 0.785 | 0.827 | 0.833 | 0.835 | 0.841 | 0.864 | 0.877 | 0.892 | 0.927 |
| | REDUCTION RATE | 18.9% | 16.9% | 15.3% | 10.8% | 10.1% | 9.9% | 9.3% | 6.8% | 5.4% | 3.8% | 0.0% |

As indicated in Table 1, FIG. 3; and FIG. 4, it is found that, in the insulated electrical wires of the samples No. 1-2 to No. 1-11 in which the surface roughness of insulation coating is greater than or equal to 3 the drag coefficients are small values that are less than 1 or further less than or equal to 0.950 in both the case where the wind speed is in the low wind speed range of 28 m/s and the case where the wind speed is in the high wind speed range of 40 m/s. Also, as indicated in Table 1 and FIG. 3, it is found that the samples No. 1-2 to No. 1-11 can effectively reduce the wind pressure load in the case where the wind speed is in the low wind speed range of 28 m/s. Quantitatively, in the insulated electrical wires of the samples No. 1-2 to No. 1-11, the reduction rates of wind pressure load in the above described low wind speed range with respect to the reference sample No. 1-1 are greater than or equal to 3%, further greater than or equal to 4%, or greater than or equal to 5% in most of the samples. Further, in this test, the following can be said;

(In Low Wind Speed Range Where Wind Speed Is 28 m/s)

(a) Generally, as the surface roughness increases, the reduction rate of wind pressure load increases.
(b) From the comparison of the samples No. 1-3 and No. 1-4, a reduction rate greater than or equal to 10% can be expected when the surface roughness is greater than or equal to 4 $\mu$m or is preferably greater than or equal to 4.5 $\mu$m.
(c) According to the samples No. 1-5 to No. 1-11, a reduction rate greater than or equal to 13% can be expected when the surface roughness is greater than or equal to 5 $\mu$m or further greater than or equal to 6.5 $\mu$m.
(d) From the comparison of the samples No. 1-6 and No. 1-7, a reduction rate greater than or equal to 15% can be expected when the surface roughness is greater than or equal to 8 $\mu$m.

Also, as indicated in Table 1 and FIG. 4, it is found that, in the above described high wind speed range, when the surface roughness is greater than or equal to 2.7 $\mu$m and less than 14.8 $\mu$m, the reduction rate of wind pressure load with respect to the reference sample No. 1-11 is greater than or equal to 3% and the wind pressure load can be reduced. Further, in this test, the following can be said;

(In High Wind Speed Range Where Wind Speed Is 40 m/s)

(x) As the surface roughness decreases, the reduction rate of wind pressure load increases.
(y) From the comparison of the samples No. 1-9 and No. 1-10, a reduction rate greater than or equal to 5% can be expected when the surface roughness is less than 13.5 $\mu$m or is preferably less than or equal to 13 $\mu$m.
(z) From the comparison of the samples No. 1-8 and No. 1-9, a reduction rate greater than or equal to 6.5% can be expected when the surface roughness is less than or equal to 10 $\mu$m.

It can be said from the above that when the surface roughness is greater than or equal to 3 $\mu$m and less than or equal to 13 $\mu$m, the reduction rate of wind pressure load can be made greater than or equal to 5% in both the low wind speed range in which the wind speed is 28 m/s and the high wind speed range in which the wind speed is 40 m/s.
From this test, it is indicated that an insulated electrical wire whose surface roughness of insulation coating is greater than or equal to 3 $\mu$m is suitably used for a low wind pressure electrical wire for which a further reduction in the wind pressure load is desired, in particular, for a low wind pressure electrical wire in the low wind speed range in which the wind speed is approximately 28 m/s. Also, it is indicated that an insulated electrical wire whose surface roughness of insulation coating is greater than or equal to 3 $\mu$m and less than or equal to 13 $\mu$m is suitably used for a low wind pressure electrical wire for which a further reduction in the wind pressure load is desired in both the above described low wind speed range and the high wind speed range in which the wind speed is approximately 40 m/s.
Further, from this test, it is indicated that an insulated electrical wire suitable for a low wind pressure electrical wire that can satisfy a specific surface roughness as described above and reduce the wind pressure load can be manufactured by causing a fluid to contact an unsolidified insulating layer configured with an extruded material, after being extruded and before being introduced into a cooling tank, to locally cool the surface layer.
Note that it is considered that when a fluid cooling material is caused to contact an unsolidified insulating layer by uniformly blowing a compressed gas to the substantially entire area of an extruded material in its circumferential direction as in this test, for example, any position on the surface of the insulating layer has a similar surface roughness. Therefore, as a simple measurement of the surface roughness, it is possible to take one desired location as the measurement area. In order to further enhance the accuracy, it is possible, as measurement areas, to take, with respect to a same position in the axial direction of the insulated electrical wire, a plurality of (two or more and less than n) locations selected along the circumferential direction of the insulated electrical wire, or to take, with respect to a plurality of different positions in the axial direction of the insulated electrical wire (two locations or three locations, for example), one desired location selected along the circumferential direction of the insulated electrical wire. It is considered preferable to include, in measurement areas, areas such as large flank portions f, first small flank portions f1, and second small flank portions f2, where wind is considered to easily become retained. Although the range to be measured can also be changed as appropriate, if it is too small, appropriate measurement cannot be performed, and as the range to be measured increases, the measurement accuracy can be considered to be enhanced. Therefore, the range to be measured may be a rectangular area whose size is approximately 1 mm to 3 mm $\times$ 3 mm to 5 mm.

The present invention is not limited to such examples. It is intended that all modifications indicated by the scope of the claims and within meanings equivalent to the scope of the claims are included. For example, in Test Example 1, the protruding-recessed shape of the insulating layer, the constituent material of the insulating layer, the surface roughening conditions, and the like can be changed as appropriate.

[Clauses]

The following structure can be adopted as a low wind pressure electrical wire desired to further reduce the wind pressure load, in particular, as a low wind pressure electrical wire that can reduce the wind pressure load in a high wind speed range in which the wind speed is approximately 40 m/s. The measurement method of surface roughness below may be similar to that for the low wind pressure electrical wire of the above described embodiment, and for a specific measurement method, the measurement method described in Test Example 1 may be referred to.

[Clause 1]

A low wind pressure electrical wire includes: a conductor; and an insulating layer that is provided on an outer periphery of the conductor, wherein a surface roughness of at least part of the insulating layer is greater than 0 $\mu$m and less than or equal to 13 $\mu$m.

[Clause 2]

In the low wind pressure electrical wire according to [Clause 1], the surface roughness of at least part of the insulating layer is greater than 2.7 $\mu$m.

Description of the Reference Numerals

1 low wind pressure electrical wire
2 conductor
3 insulating layer
30 mountain-shaped portion
32 valley-shaped portion
301 first protruding portion
302 recessed portion
303 second protruding portion
320 inscribed circle
f large flank portion
f1 first small flank portion
f2 second small flank portion

**Claims**

1.   A low wind pressure electrical wire comprising:

a conductor; and
an insulating layer that is provided on an outer periphery of the conductor,
wherein a surface roughness of at least part of the insulating layer is greater than or equal to 3 $\mu$m.

2.   The low wind pressure wire according to claim 1, wherein the surface roughness of at least part of the insulating layer is less than or equal to 13 μm.

3. The low wind pressure electrical wire according to claim 1 or claim 2,
wherein the insulating layer includes mountain-shaped portions protruding in a radial direction of the conductor and valley-shaped portions recessed in the radial direction of the conductor to be adjacent and periodic in a circumferential direction of the conductor, and
wherein the surface roughness of large flank portions connecting the mountain-shaped portions and the valley-shaped portions is greater than or equal to 3 μm.

4. The low wind pressure electrical wire according to claim 3, wherein each of the mountain-shaped portions includes:

a first protruding portion and a second protruding portion arranged such that a center in a circumferential direction in the mountain-shaped portion is interposed, the first protruding portion and the second protruding portion protruding in the radial direction of the conductor with respect to the center in the circumferential direction; and
a recessed portion arranged between the first protruding portion and the second protruding portion and recessed in the radial direction of the conductor.

5. The low wind pressure electrical wire according to claim 4, wherein at least one of a surface roughness of a first small flank portion connecting the first protruding portion and the recessed portion and a surface roughness of a second small flank portion connecting the second protruding portion and the recessed portion is greater than or equal to 3 μm.

6. A method of manufacturing a low wind pressure electrical wire, the method comprising:

an extruding step of extruding, from an extruder, an insulating material that is in a fluid state into a predetermined shape to form an extruded material covering an outer periphery of a conductor with an unsolidified insulating layer; and
a solidifying step of introducing the extruded material into a cooling tank to solidify the unsolidified insulating layer to form an insulating layer having the predetermined shape,
wherein the method includes, between the extruding step and the solidifying step, a surface roughening step of cooling a surface layer of the unsolidified insulating layer by causing a fluid cooling material that is at a temperature less than an extrusion temperature to be in contact with the extruded material after being discharged from an outlet of the extruder and before being introduced into the cooling tank.

7. The method of manufacturing the low wind pressure electrical wire according to claim 6,
wherein the fluid cooling material is a gas, and
wherein, in the surface roughening step, the gas is blown to the extruded material at a pressure greater than or equal to 0.01 MPa and less than or equal to 0.1 MPa.

# FIG.1

# FIG.2

# FIG.3

# FIG.4

**INTERNATIONAL SEARCH REPORT**

| International application No. |
|---|
| PCT/JP2017/027517 |

A.  CLASSIFICATION OF SUBJECT MATTER
*H01B7/18*(2006.01)i, *B29C47/02*(2006.01)i, *B29C47/88*(2006.01)i, *H01B13/14* (2006.01)i

According to International Patent Classification (IPC) or to both national classification and IPC

B.  FIELDS SEARCHED

Minimum documentation searched (classification system followed by classification symbols)
H01B7/18, B29C47/02, B29C47/88, H01B13/14

Documentation searched other than minimum documentation to the extent that such documents are included in the fields searched
Jitsuyo Shinan Koho        1922–1996   Jitsuyo Shinan Toroku Koho   1996–2017
Kokai Jitsuyo Shinan Koho  1971–2017   Toroku Jitsuyo Shinan Koho   1994–2017

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y | JP 2004-164899 A  (Yazaki Corp.),<br>10 June 2004 (10.06.2004),<br>paragraphs [0016], [0020] to [0021], [0024]; fig. 1<br>(Family: none) | 1-2<br>3-7 |
| Y | JP 2016-58387 A  (J-Power Systems Corp.),<br>21 April 2016 (21.04.2016),<br>paragraphs [0012] to [0020]; fig. 1<br>(Family: none) | 3-5 |
| Y | JP 2-174004 A  (Showa Electric Wire & Cable Co., Ltd.),<br>05 July 1990 (05.07.1990),<br>page 2, upper right column, line 19 to lower right column, line 6; fig. 1 to 3<br>(Family: none) | 6-7 |

☐  Further documents are listed in the continuation of Box C.          ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    24 August 2017 (24.08.17) | Date of mailing of the international search report<br>    05 September 2017 (05.09.17) |
|---|---|
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (January 2015)

**EP 3 496 113 A1**

REFERENCES CITED IN THE DESCRIPTION

**Patent documents cited in the description**

- JP 2016155074 A
- JP 2016058387 A